## Europäisches Patentamt

(19) **European Patent Office**

**Office européen des brevets**

(11) Publication number: **0 129 835**
**B1**

(12) **EUROPEAN PATENT SPECIFICATION**

(45) Date of publication of patent specification: **22.03.89**

(51) Int. Cl.⁴: **C 10 G 31/09, B 01 D 37/00, B 01 D 37/02**

(21) Application number: **84107055.0**

(22) Date of filing: **19.06.84**

(54) Method for treatment of crude oil.

(30) Priority: **22.06.83 JP 110810/83**

(43) Date of publication of application:
**02.01.85 Bulletin 85/01**

(45) Publication of the grant of the patent:
**22.03.89 Bulletin 89/12**

(84) Designated Contracting States:
**DE FR GB**

(56) References cited:
**GB-A-2 038 652**

**SCHIFF & HAFEN, vol. 32, no. 9, September 1980, pages 229-233, Uetersen, DE; R. LENNARTZ: "Filtertechnische Aufbereitung von Schwerölen"**

(73) Proprietor: **HITACHI, LTD.**
**6, Kanda Surugadai 4-chome Chiyoda-ku Tokyo (JP)**

(72) Inventor: **Sankichi, Takahashi**
**2-26-17, Moriyama-cho**
**Hitachi-shi Ibaraki-ken (JP)**
Inventor: **Harumi, Matsuzaki**
**2-18-5, Daihara-cho**
**Hitachi-shi Ibaraki-ken (JP)**
Inventor: **Toshimi, Mukushi**
**2-13-11, Nishinarusawa-cho**
**Hitachi-shi Ibaraki-ken (JP)**
Inventor: **Katsuya, Ebara**
**1406, Motoyoshida-cho**
**Mito-shi Ibaraki-ken (JP)**
Inventor: **Tsunehiko, Takakusagi**
**4-2-6, Nishinarusawa-cho**
**Hitachi-shi Ibaraki-ken (JP)**
Inventor: **Masahiro, Yoshida**
**4-1-1, Jounan-cho**
**Hitachi-shi Ibaraki-ken (JP)**
Inventor: **Joushiro, Sato**
**3-11-7, Namekawahon-cho**
**Hitachi-shi Ibaraki-ken (JP)**
Inventor: **Yasumasa, Yamane**
**2-5-415, Bizen-cho**
**Mito-shi Ibaraki-ken (JP)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# EP 0 129 835 B1

(72) Inventor: **Katsumi, Sakaguchi**
**4-3-20, Ouse-cho**
**Hitachi-shi Ibaraki-ken (JP)**
Inventor: **Akira, Watanabe**
**1-6-9, Hakusan**
**Abiko-shi Chiba-ken (JP)**

(74) Representative: **Finck, Dieter et al**
**Patentanwälte v. Füner, Ebbinghaus, Finck**
**Mariahilfplatz 2 & 3**
**D-8000 München 90 (DE)**

## Description

The invention is related to a method for treatment of crude oil containing sludge grains before storage and refining.

Crude oil is usually, after unloading it from a tanker, kept in a tank for some time. In this time, the sludge in the crude oil settles at the bottom of the tank. Therefore, cleaning of the tank is necessary at regular intervals. This cleaning is difficult and takes a long time because the sludge at the bottom in the tank is tightly congealed due to paraffin constituents etc., so the cleaning has to be done manually, and under bad work conditions within the tank. Only after this cleaning is completed, the tank can be inspected for corrosion etc.

It is therefore the object of the invention to provide a method which simplifies cleaning and inspection of tanks.

According to the present invention, this object is solved by treating crude oil containing sludge grains before storage and refining, removing therefrom the sludge grains having a sedimentation velocity greater than $7.7 \times 10^{-5}$ m/s by filtering using a filter medium with perforations of about 0.05 mm to 2 mm before the crude oil is transferred to a reservoir for storage. By this removal of a part of the sludge grains before the crude oil enters a storage tank, settlement and accumulation of oil sludge in the tank is minimized.

Filtering methods for heavy oil are disclosed in "Schiff & Hafen", Vol. 32 (1980), No. 9, pages 229 to 233. However, this document describes preparation of fuel for internal combustion engines and not any treatment of crude oil before storage and refining.

A preferred method of removing the sludge comprises the forming of a layer of the sludge grains as a filter aid on the surface of the filter medium. The mean diameter of the sludge grains in the layer is preferably less than ten times as large as the minimum diameter of the sludge grains to be separated by filtration.

The crude oil may be supplied to a liquid cyclone prior to the filtration, the sludge grains being classified by the cyclone into coarse grains, small grains and fine grains, the coarse grains being separated from the crude oil by sedimentation and the small grains by filtering, using the small grains as a filter aid. The mean diameter of the small grains to be coated on the filter medium as a filter aid may be less than ten times the minimum diameter of the fine grains to be separated by filtration.

The sludge grains to be separated by the filtration according to the invention may be larger than 5 μm.

The method of removing crude oil sludge according to the invention may further comprise, after the filtered crude oil is stored in the reservoir for a predetermined period of time, detecting the condition of crude oil sludge settled in the reservoir, dispersing the settled sludge by stirring the crude oil, and removing the crude oil containing the suspended sludge from the reservoir. By this, not only heavy inorganic sludges can be removed from the crude oil, but also waxy constituents and salt water drops protected by a soap layer. The detection of the condition of the crude oil sludge may be performed by scanning the surface of the bottom of the reservoir with supersonic waves and detecting the reflected waves.

The method according to the invention is now, by way of example and with reference to the drawings, described as follows. In the drawings,

Fig. 1 is a sectional view of a filter medium showing the principle of precoating the filter;

Fig. 2 and Fig. 3 are flow diagrams of examples embodying the invention;

Fig. 4 shows data of classification properties of a liquid cyclone;

Fig. 5 is a system chart of a crude oil storing equipment;

Fig. 6a is a plain view; and

Fig. 6b is a vertical section view of a schematic structure of a crude oil tank.

The inventors studied the sedimentation phenomena of sludge in crude oil and have found that the sedimentation and accumulation of inorganic sludge takes place within 3 days in a storage tank, and then the further settlement of sludge is extremely slow, i.e., the settling of minute sludge grains with a sedimentation velocity of less than $7.7 \times 10^{-5}$ m/s is almost negligible within usual storage times in a tank. As a result, there was found that it is preferable to remove part of the sludge having comparatively coarse grains and a sedimentation velocity greater than $7.7 \times 10^{-5}$ m/s before storing and filtration for the separation of sludge grains larger than a certain size.

The method of removing crude oil sludge of this invention is featured by separating the sludge which would settle or precipitate in a storage tank within 3 days. Namely, the filtration of the sludge in crude oil is performed by means of a filter medium with holes or perforations of 0.05 mm or above in diameter. The relationship between the diameter $d$ of grain size and the specific gravity $\gamma$ of grain satisfies the following equation:

$$\frac{d^2(\gamma - \gamma_L)}{18\,\mu} \geqq 7.7 \times 10^{-5} \qquad (I)$$

where $\gamma_L$ is the specific gravity of fluid and $\mu$ the viscosity of liquid.

Grains in a stationary liquid move by a driving force due to the difference in specific gravity between the grains and the liquid.

3

Consequently, when grains of different specific gravity precipitate, the gravity acting on the grains balances with a flow resisting force so that the grains settle with a terminal velocity $u$ represented by the equation

$$u = \frac{d^2(\gamma - \gamma_L)}{18\,\mu} \qquad \text{(II)}$$

Here $u$ from formula (II) represents the ideal state in a stationary liquid in relation to any $d$. However, in an actual tank, grains having a diameter $d_c$ (which is hereafter called the critical settling grain diameter) do not settle practically by the turbulent flow of liquid due to thermal convection, vibration of a tank wall etc. This is the sludge diameter which does not settle in 3 days. Usually, the volume of settled sludge increases according to an increment in time, and the volume reaches a saturation value after a certain time Ts. The volume of settled sludge at Ts depends on $\eta$ (the viscosity of crude oil) and $\gamma_L$, but Ts itself is independent of $\eta$ and $\gamma_L$ and is constant.

The value of the critical settling grain diameter can be given by formula (I), it varies according to various values of viscosity and specific gravity of crude oil. This invention is based on the discovery that the sludge grains larger than the critical settling grain diameter can be removed in the process of transportation of crude oil from crude oil supply tanks such as tankers to reservoirs such as storage tanks.

The values of viscosity of crude oil varies according to oil producing districts and range from 2.5 to $280 \cdot 10^{-6}$ m$^2$/s. The values of the critical settling grain diameter generally range from 5 to 170 μm.

As a technique for separating the sludge from the liquid, a filtration process using a filter medium may be applied.

A back washing process step is necessary for this technique for regenerating the filter medium. However, after repeated filtering and back-washing cycles, the sludge which cannot be removed from the filter medium by back-washing may adhere to the filter medium and deteriorate filtration efficiency.

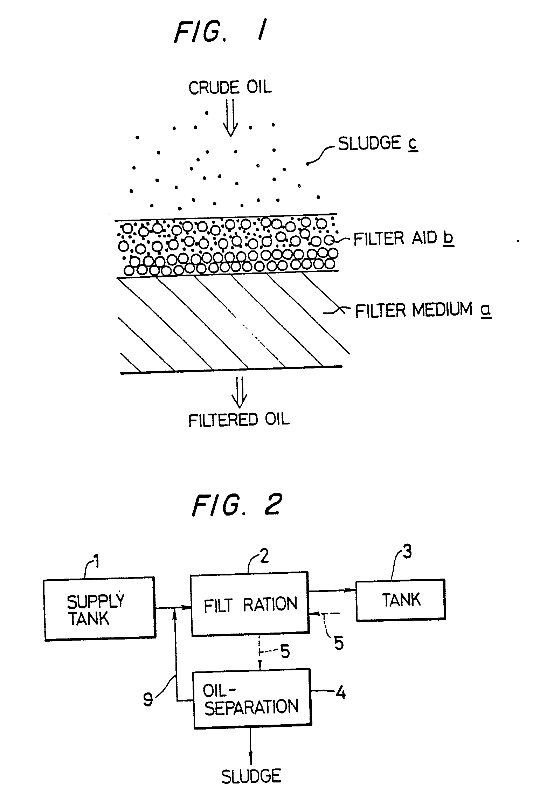

Therefore, it is especially effective for the method of this invention to apply a filtration process with precoating of the filter medium. In this process, a filter aid $b$ having perforations of an adequate diameter is precoated on the surface of the filter medium $a$ as shown in Fig. 1; this filter aid $b$ retains sludge grains $c$ to remove them from the liquid. The sludge and filter aid are separated from the filter medium by the back-washing and are separated from each other, and the filter aid can be reused. Consequently, the back-washing can be performed completely and a long operation of the filter medium is possible. As the sludge is retained in an internal filtration, the increase of pressure loss is less than in the case of the usual surface filtration. The separating operation of sludge from the filter aid is necessary, or the amount of accumulated sludge increases. In case of separation of the sludge and filter aid, the addition of a special coagulating agent and utilization of supersonic waves etc. are necessary. These processes are not suitable for crude oil because these may change the composition of cruce oil and may result in detonation. If the separated sludge is disposed of by burning, the expense will increase in proportion to the amount of the sludge.

In this invention, part of the separated and recovered sludge grains of an adequate diameter can be used as a source for the filter aid. In this case, the merits of conventional filtration can be adopted, and the separating of the separated sludge on the filter aid is unnecessary. In other words, the mixture of the sludge and filter aid can be disposed of as it is.

The settling mechanism of the crude oil sludge was studied by the inventors with a microscope, a differential thermal analyzer and so on, and the following conclusions were obtained.

(1) The settling sludge in the tank comprises a layer of a compacted waxy composition ① comprising high pour point substances such as wax. There are dispersed salt water drops ③ protected by a soap layer ② and inorganic sludges ④ such as Fe-compounds in the layer.

(2) Almost all of the waxy composition in the settling sludge can be fluidized by a steam treatment at about 60°C and can be removed from the tank. But, the soap and the salt water drops protected by the soap layer and inorganic sludges are residues in the tank forming a residual sludge.

(3) The above items ① and ② form or coagulate in the tank.

(4) The specific gravity of item ④ is 3—5 times as large as that of items ①, ② and ③.

According to these results, it is preferably that the treatment of ④ should be carried out in the transportation process from a tanker to a tank while the treatment of ①, ② and ③ should be performed in the tank.

The treatment of ④ will now be explained. Table 1 shows results of the fluorescence X-ray analysis of DT analysis residue in the residual sludge. Almost all inorganic sludges were Fe-compounds. Also, almost all sludge is formed by compounds of heavy metal ions.

4

TABLE 1

| Composition (wt.%) | | Composition (wt.%) | | Composition (wt.%) | |
|---|---|---|---|---|---|
| Fe | 45.8 | Na | 1.57 | Ni | 0.02 |
| Ca | 4.86 | K | 0.3 | V | <0.01 |
| Si | 3.18 | Cu | 0.08 | | |
| Zn | 3.1 | Pb | 0.06 | | |

The invention is now explained by way of figures as follows. The following results were obtained from experiments conducted under the conditions shown below.

The detailed distribution of grain size of suspended sludge in crude oil is unknown at present. But, the larger part of sludge is gravel, while the smaller part is a corrosion product such as rust etc. The distribution is regarded as a normal distribution. With time, the peak of distribution moves to the smaller side, because the larger parts are easier to settle and deposit on the bottom and the surface of the wall of the tanker. Therefore, the amount of the sludge brought into the storage tank is substantially decreased before landing of crude oil. Consequently, in the following experiment, a group of grains of calcium carbonate whose specific gravity is almost equal to that of $Fe(OH)_2$ being the predominant corrosion product, was dispersed as a sludge sample in castor oil.

The properties of main imported crude oil vary with producing countries as shown in the following Table.

TABLE 2

| Properties | Imported crude oil | Castor oil |
|---|---|---|
| Viscosity | $2.5—34.7 \cdot 10^{-6}$ m²/s (21—30°C) | $4.75—10.3 \cdot 10^{-6}$ m²/s (20—30°C) |
| Specific gravity | 0.83—1 | 0.968 |

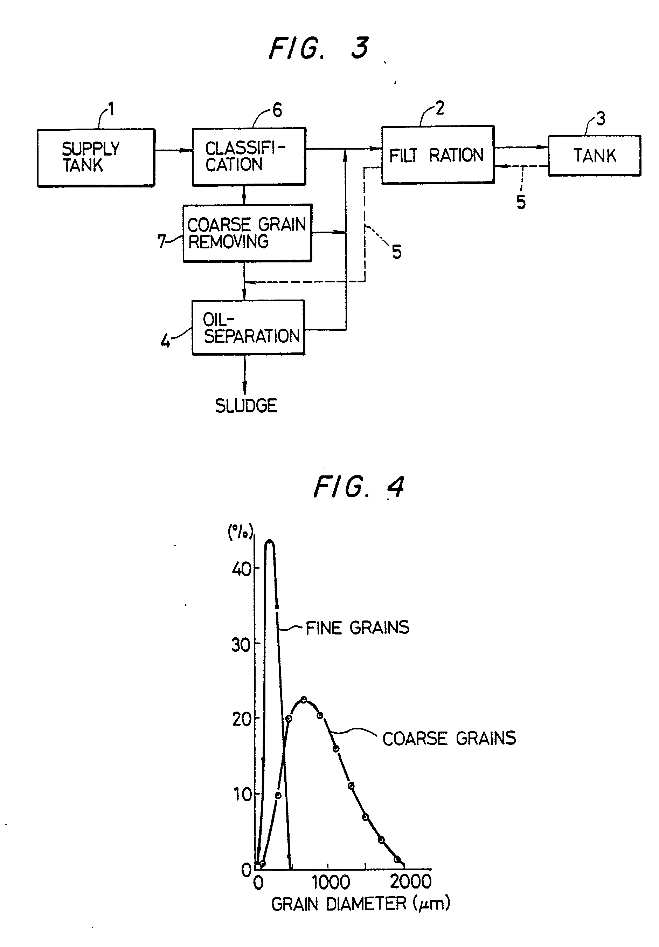

Fig. 2 is a flow sheet showing a method for removing crude oil sludge. Crude oil, which is sent from a crude oil supply tank 1, is subjected to a separation step to separate sludge by a filtration step 2 and is stored in a tank 3. It is convenient to regenerate the filter medium by periodic back-washing process 5. In this process, it is very effective to utilize the filtered crude oil. The sludge after back-washing is processed in an oil separation process 4, if necessary, and the oil 9 which was separated there is introduced into the filtration step 2. The liquid for back-washing is not necessarily the filtered crude oil.

Fig. 3 is another flow sheet showing a method for removing crude oil sludge. This system comprises the crude oil supply tank 1, a classifying process step 6, a filtration step 2, a coarse grain removing process 7, the oil separation process 4 and a back-washing system 5. The sludge grains in crude oil are classified into coarse grains, small grains and fine grains. The fine grains have such a mean grain diameter that they do not settle within 3 days in a tank. The small grains have a mean grain diameter which is about ten times as large as the largest one among fine grains. The coarse grains have a mean grain diameter larger than that of small grains. Fig. 4 is a distribution of grain diameters (µm), which shows a distribution of small grains and of coarse grains of calcium carbonate. The classification was carried out by means of a liquid cyclone. The small grains and coarse grains have a kinetic viscosity of 0.007 kg · s/m² in the liquid.

Most sludge is floating in crude oil due to the vibration etc. of the tank itself, while it is transported on the sea by the crude oil supply tank 1 such as a tanker. Crude oil is sent to the classifying process 6, where the sludge in the crude oil is classified into small grains and coarse grains. After filtration, the small grains are precoated on the surface of a filter medium as a filter aid. Smaller grains having a grain size which can pass the filter medium is to be sent to tank 3 to be stored. On the other hand, the classified coarse grains are subjected to a separation step 7 to remove the coarse grains, whereby sludge of coarse grains is separated from the crude oil. The former is subjected to the oil separating process 4 and the latter to filtration process 2, so that the sludge grains of a larger diameter than the critical settling grain diameter can be removed.

The inventors have conducted experiments on the filtration of $Fe(OH)_2$ which is a corrosion product by utilizing an ion exchange resin of about 300 µm as a filter aid. It has been revealed that the grains whose diameter is about a tenth as little as that of the filter aid could be retained by the filter medium. Consequently, the mean grain diameter of the filter aid should be less than 10 times as large as the critical settling grain diameter, but it is preferable to utilize such a filter aid whose grain diameter is about 10 times as large as the critical settling grain diameter in order to make maximum use of the merits of the precoated filter.

However, it is most advantageous for the back-washing of the filter medium used in the filtration 2 to use the crude oil in the tank. The crude oil used for the back-washing, the filter aid, and the retained sludge should then be sent to the oil separating process 4, if necessary, where oil is separated. The separated oil is sent to the tank through the filtration process 2 or directly to a tank.

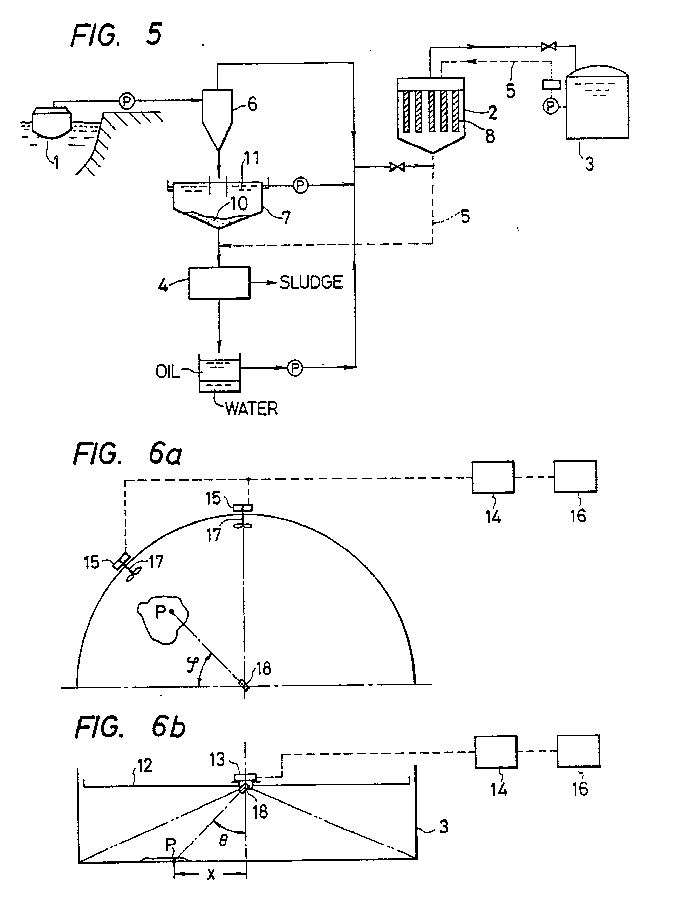

Fig. 5 shows equipment for removing crude oil sludge. This equipment comprises a liquid cyclone 6, a filter 2 with a filter aid such as sludge grains which are self-supplied in the system, a coarse grain removing equipment (sedimentation tank) 7, a oil separator (decanter) 4, and a back-washing system 5.

Below is an explanation of a case where the kinetic viscosity of crude oil is 0.007 kg · s/m². The critical selecting grain diameter is about 30 µm in this case.

In order to use sludge grains as a filter aid, the sludge whose mean grain diameter is 300 µm or less, is classified as a filter aid from the grains in crude oil by a liquid cyclone. As the classification characteristics of a liquid cyclone vary with viscosity of crude oil, specific gravity, the pressure at the inlet, the distribution flow ratio and various sizes of equipment, the desired small grains can be separated by controlling these factors. An alteration of the condition of classification for the variation of the viscosity of the crude oil is almost unnecessary or, if necessary, only a little alteration of the inlet pressure or the distribution flow ratio is enough. The flow ratio which is derived from the classification characteristics shown in Fig. 4 is as follows: Small grain side:coarse grain side=9:1 (by weight).

Crude oil containing small grains is introduced from the liquid cyclone 6 into the filter 2 precoated with a self-supplied filter aid, the filter aid being small grains of sludge precoated on the surface of the filter medium. The diameter of the perforations of the filter medium is, for example, less than about 0.3 mm. Crude oil containing coarse grains, whose flow ratio decreased to 1/10, is introduced from liquid cyclone into sedimentation tank 7. The coarse grains settle here, and the coarse grains 10 of the sludge are taken out of the bottom of the sedimentation tank. On the other hand, the crude oil 11 containing sludge grains smaller than the small grains is taken out of the top of the sedimentation tank by overflow, and introduced into the filter 2 with the filter medium 8. In the filter 2, the sludge grains larger than the fine grains are removed and separated from the crude oil which is introduced into a tank. The coarse grains 10 taken out of the bottom of the sedimentation tank 7 are transferred to the decanter 4, and the crude oil is withdrawn from the sludge. The crude oil withdrawn here proceeds to the filter 2, or is transferred to a tank in accordance with the density of sludges.

Back-washing of the filter medium 8 is done when the pressure loss in the filter 2 reaches a certain value. In this system, the back-washing is done by reserved crude oil, and the crude oil used for the back-washing is introduced into the decanter with small grains precoating the filter aid and retaining sludge, then it is separated into solid and liquid. However, sludge can be continuously removed as well, in the way that filtration is done while another filter is back-washed, converting plural filters one against another.

As above, an example for the transportation of crude oil from a tanker to a storage tank is shown in explanation of this invention. It is needless to say that the storage tank will serve as a crude oil supply tank and the tanker or refining process will serve as a reservoir. And besides, the same storage tanks or the same tankers will same as both crude oil supply tank and reservoir. The equipment for removing sludge of this invention may be installed on a tanker as well.

Next, the treatment of wax composition ①, soap layer ② and salt water ③ will be explained. The inorganic and organic suspended solids in the crude oil are settled on the bottom of the tank in the form of sludge which remains in the tank when the crude oil is taken out from the tank. The sludge is dispersed in the crude oil by periodic mixing in mixers provided for the tank. While the mixers are operated, the solidification of the sludge is suppressed, but this effect is insufficient for the following reasons.

(1) A tank has a diameter of about 80—100 m.

(2) The position of the sludges in the tank cannot be detected.

After the studies of the above mechanism of sludge formation and specifications of the above tank, it has been found that the position of almost all sludges in the tank could be detected by simply using a generator and receiver for ultra-sonic waves or microwaves and that it was best to take the crude oil together with these sludges out from the tank.

At present, ultra-sonic waves or microwaves have been utilized for the examinations or detections of (a) the bottom in the sea, lakes or rivers, (b) things laid under the ground, (c) dredging works, and so on. The sludge detection in the tank has the following three special features in comparison with the conventional utilization of ultra-sonic waves: 1) the sludges are dispersed on a metal plate, 2) the tank diameter is large, as mentioned above, and 3) the constituents and constitution of sludges are unknown.

A sonar utilizes vertical reflected waves in case of (b) mentioned above and random reflected waves in the case of fish detection. When an ultra-sonic wave impinges an even surface such as the metal plate surface, there is no random reflection. Therefore, the reflected wave from the metal surface cannot be obtained by a transmitter and receiver except when the angle of reflection is vertical. On the other hand, when the ultra-sonic wave impinges an uneven surface such as sludge, random reflected waves can be obtained by a transmitter and receiver irrespective of the angle of reflection. The bottom of a tank is equivalent to the above metal plate.

Therefore, by impinging the metal plate with the ultra-sonic wave at an angle of reflection and by receiving the reflected wave from the tank bottom, the existence of sludge in any points of the tank bottom can be determined. If no reflected wave is received, there is no sludge on the tank bottom. Also, the method of scanning or irradiating the metal plate surface with the ultra-sonic wave at an angle can examine a tank with a diameter of 80 to 100 m. All sludges on the tank bottom can be detected by a transmitter and receiver of an ultra-sonic wave which is set on the center of the floating roof with a sensor having a swinging neck.

Table 3 shows the results which were obtained by studying Arabian crude oil as to the constituents and composition of the crude oil sludge. Here, it is important in considering the utilization of ultra-sonic waves in that the settling sludge in the tank is a wax composition with salt water drops uniformly protected by soap and inorganic sludges. It was found that the percentage of these salt water drops to the sludge weight is about 60% by weight.

The inherent sonic impedance $Z_1$ of crude oil is $10.7 \times 10^5$ Ns/m$^3$ at 34°C and the inherent sonic impedance $Z_2$ of wax is $11.6 \times 10^5$ Ns/m$^3$. Therefore, a sonic pressure reflective ratio $\gamma = |(Z_1 - Z_2)/(Z_1 + Z_2)|$ between the crude oil and the wax is as small as 4%. On the other hand, the inherent sonic impedance $Z_3$ of salt water is $15.5 \times 10^5$ Ns/m$^3$. Thus, $\gamma$ between crude oil and salt water is as large as 18.3%.

Generally, the total sonic pressure reflective ratio increases and the reflective loss decrease as the frequency of the ultra-sonic wave increases. Therefore, utilization of a high frequency ultra-sonic wave is more preferable.

TABLE 3

|  | Wax and the like | Salt water drops covered by soap | Inorganic sludges |
|---|---|---|---|
| Composition | 30 wt.% | 60 wt.% | 10 wt.% |
| Constitution | Wax with salt water drops protected by soap and inorganic sludges | | |

The invention is further explained as follows. Figs. 6a and 6b show a crude oil tank embodying the invention. This embodiment comprises the tank 3, a floating roof 12, a transmitter and receiver for ultra-sonic waves 13, a control device 14 comprising a memory, calculation and control devices (which is hereafter abbreviated as MCCD), mixers 15 and a display device 16. The transmitter and receiver 13 which has its sensor 18 placed in the crude oil is installed in the center of the floating roof 12. The sensor can swing in the directions of angles θ and φ. By sending the ultra-sonic wave in the direction of certain angles θ and φ, the existence of a reflected wave is detected by the transmitter and receiver 13. Reflected wave and reflective point P(x, φ) which is calculated by using the values of θ, φ and depth are memorized by MCCD. For example, swing of the sensor in the direction of the circle begins at an angle θ of 10°. The swing is carried out from 0° to 360°. Next, at an angle θ of 15°, the sensor is also swung. The value of θ is increased from 10° to the reflective angle as shown by a two dots dashed line.

The sludge distribution in the tank can be displayed on the display device 16 in accordance with an output of all information. The mixers 15 have propeller shafts 17 which can swing in all directions. According to the above detection of sludge distribution, one or more of the mixers which position is nearest to any sludges are selected and the moving range of its propeller shafts are set by MCCD. Then, the sludge is dispersed into the crude oil by operating the mixers. It is desirable that all these operations are controlled and automated by MCCD. Of course, these operations can be carried out by manual operations, and two or more mixers can be operated at the same time.

The removal of crude oil from the tank is started by comparing the difference between the sludge distributions before and after stirring.

It is possible by this invention to reduce the sludge volume in a tank and to simplify remarkably the operation of cleaning and inspection of a storage tank for crude oil. Moreover, it is possible to watch the conditions of the sludges in the tank all the time and to prevent the extraordinary settling of sludges therein.

**Claims**

1. A method for treatment of crude oil containing sludge grains before storage and refining, characterized in that the sludge grains having a sedimentation velocity greater than $7.7 \times 10^{-5}$ m/s are removed from the crude oil by filtering using a filter medium with perforations of about 0.05 mm to 2 mm before the crude oil is transferred to a reservoir.

2. The method according to claim 1, characterized in that a layer of sludge grains is formed as a filter aid on the surface of the filter medium.

3. The method according to claim 2, characterized in that the mean diameter of the sludge grains in the layer is less than ten times as large as the minimum diameter of the sludge grains to be separated.

7

4. The method according to claim 2, characterized in that prior to the filtration the sludge grains are classified by a liquid cyclone into coarse grains, small grains and fine grains, and that the coarse grains are separated from the crude oil by sedimentation and small grains are separated by filtering, using the small grains as a filter aid.

5. The method according to claim 4, characterized in that the mean diameter of the small grains to be coated on the filter medium as a filter aid is less than ten times the minimum diameter of the fine grains to be separated by filtration.

6. The method according to claim 1, characterized in that the sludge grains to be removed are larger than 5 µm.

7. The method according to claim 1, characterized in that, after the filtered crude oil is stored in the reservoir for a predetermined period of time, the condition of crude oil sludge settled in that reservoir is detected, said settled sludge is dispersed by stirring the crude oil, and the crude oil containing the sludge is removed from the reservoir.

8. The method according to claim 7, characterized in that detection of the condition of the crude oil sludge is performed by scanning the surface of the bottom of the reservoir with ultra-sonic waves and by detecting the reflected waves.

## Patentansprüche

1. Verfahren zur Behandlung von Schlammkörner enthaltendem Rohöl vor der Lagerung und dem Raffinieren, dadurch gekennzeichnet, daß die Schlammkörner, welche eine Sedimentationsgeschwindigkeit von mehr als $7,7 \times 10^{-5}$ m/s, aus dem Rohöl durch Filtern unter Verwendung eines Filtermediums mit Perforationen von 0,05 mm bis 2 mm entfernt werden, bevor das Rohöl zu einem Speicherbehälter überführt wird.

2. Verfahren nach Anspruch 1, dadurch gekennzeichnet, daß eine Schicht der Schlammkörner als Filterhilfe auf der Oberfläche des Filtermediums ausgebildet wird.

3. Verfahren nach Anspruch 2, dadurch gekennzeichnet, daß der mittlere Durchmesser der Schlammkörner in der Schicht kleiner als zehn mal so groß wie der minimale Durchmesser der abzutrennenden Schlammkörner ist.

4. Verfahren nach Anspruch 2, dadurch gekennzeichnet, daß vor der Filtration die Schlammkörner durch einen Hydro-Zyklon in grobe Körner, kleine Körner und feine Körner klassiert werden und daß die groben Körner aus dem Rohöl durch Sedimentation und die kleinen Körner durch Filtrieren abgetrennt werden, wobei die kleinen Körner als Filterhilfe verwendet werden.

5. Verfahren nach Anspruch 4, dadurch gekennzeichnet, daß der mittlere Durchmesser der kleinen, als Schicht auf dem Filtermedium als Filterhilfe aufbringenden Körner kleiner als 10 mal der minimale Durchmesser der durch Filtration abzutrennenden feinen Körner ist.

6. Verfahren nach Anspruch 1, dadurch gekennzeichnet, daß die zu entfernenden Schlammkörner größer als 5 µm sind.

7. Verfahren nach Anspruch 1, dadurch gekennzeichnet, daß, nachdem das filtrierte Rohöl in dem Speicherbehälter für einen vorher festgelegten Zeitraum gespeichert ist, der Zustand des sich in dem Speicherbehälter abgesetzt habenden Rohölschlamms festgestellt wird, daß der abgesetzte Schlamm durch Rühren des Rohöls dispergiert wird und daß das den Schlamm enthaltende Rohöl aus dem Speicherbehälter entfernt wird.

8. Verfharen nach Anspruch 7, dadurch gekennzeichnet, daß die Feststellung des Zustands des Rohölschlamms dadurch ausgeführt wird, daß die Oberfläche des Bodens des Speicherbehälters mit Ultraschallwellen abgetastet und die reflektierten Wellen erfaßt werden.

## Revendications

1. Procédé pour traiter du pétrole brut contenant des grains de boue avant le stockage et le raffinage, caractérisé en ce qu'on élimine du pétrole brut les grains de boue possédant une vitesse de sédimentation supérieure à $7,7 \times 10^{-5}$ m/s, par filtration en utilisant un milieu filtrant comportant des perforations d'une taille d'environ 0,05 mm à 2 mm avant le transfert du pétrole brut dans un réservoir.

2. Procédé selon la revendication 1, caractérisé en ce qu'on forme une couche de grains de boue en tant qu'aide à la filtration, à la surface du milieu filtrant.

3. Procédé selon la revendication 2, caractérisé en ce que le diamètre moyen des grains de boue de la couche est inférieur au décuple du diamètre minimum des grains de boue devant être séparés.

4. Procédé selon la revendication 2, caractérisé en ce qu'avant la filtration, les grains deboue sont classés à l'aide d'un hydrocyclone en grains grossiers, en petits grains et en grains fins, et que les grains grossiers sont séparés du pétrole brut par sédimentation et que les petits grains sont séparés par filtration, moyennant l'utilisation des petits grains en tant qu'aide à la filtration.

5. Procédé selon la revendication 4, caractérisé en ce que le diamètre moyen des petits grains devant être déposés sur le milieu filtrant sous la forme d'une couche utilisée comme aide à la filtration est inférieur au décuple du diamètre minimum des grains fins devant être séparés par filtration.

6. Procédé selon la revendication 1, caractérisé en ce que les grains de boue devant être éliminés sont d'une taille supérieure à 5 µm.

7. Procédé selon la revendication 1, caractérisé en ce que, une fois que le pétrole brut filtré est stocké dans le réservoir pendant un intervalle de temps prédéterminé, on détecte l'état de la boue de pétrole brut qui s'est décantée dans ce réservoir, on disperse ladite boue décantée en agitant le pétrole brut et on retire du réservoir le pétrole brut contenant la boue.

8. Procédé selon la revendication 7, caractérisé en ce que la détection de l'état de la boue de pétrole brut est exécutée par balayage de la surface du fond du réservoir par des ondes ultrasonores et détection des ondes réfléchies.

## FIG. 1

CRUDE OIL

SLUDGE c

FILTER AID b

FILTER MEDIUM a

FILTERED OIL

## FIG. 2

```
  1              2                3
SUPPLY        FILT RATION      TANK
TANK
                    ┆--5    ⌐-┐
                           5
              ┆---5
         9    OIL-              4
              SEPARATION

                SLUDGE
```

## FIG. 3

```
┌──────────┐     ┌──────────┐          ┌──────────┐     ┌──────────┐
│ SUPPLY   │ →   │ CLASSIFI-│    →     │ FILT     │ →   │ TANK     │
│ TANK     │     │ CATION   │          │ RATION   │     │          │
└──────────┘     └──────────┘          └──────────┘     └──────────┘
      1               6                      2                3
                      ↓
              ┌──────────────┐
         7 ─  │ COARSE GRAIN │  →        5
              │ REMOVING     │
              └──────────────┘
                      ↓
              ┌──────────┐
         4 ─  │ OIL-     │
              │ SEPARATION│
              └──────────┘
                      ↓
                  SLUDGE
```

## FIG. 4

FIG. 5

6

11

10

7

P

5

2

8

P

5

3

1

4 → SLUDGE

OIL

WATER

FIG. 6a

15

17

15

17

14

16

P

$\varphi$

18

FIG. 6b

12

13

18

14

16

3

P

$\theta$

x